Europäisches Patentamt

European Patent Office

Office européen des brevets

(11) Publication number: **0 232 011**
A1

## (12) EUROPEAN PATENT APPLICATION

(21) Application number: 87300157.2

(22) Date of filing: 08.01.87

(51) Int. Cl.4: **F 16 C 35/00**
F 16 C 23/00

(30) Priority: 08.01.86 ZA 860142

(43) Date of publication of application:
12.08.87 Bulletin 87/33

(84) Designated Contracting States:
DE ES FR GB IT NL SE

(71) Applicant: S.K.F. SOUTH AFRICA (PROPRIETARY)
LIMITED
Jones Road
Boksburg Transvaal (ZA)

(72) Inventor: Lipke, Walter Karl
29 Hazel Road Benoni Agricultural Holdings
Benoni Transvaal (ZA)

(74) Representative: Blanco White, Henry Nicholas et al
ABEL & IMRAY Northumberland House 303-306 High
Holborn
London WC1V 7LH (GB)

(54) Shaft expansion adjustment.

(57) A bearing housing is mounted between pairs of flanges 12
resting on stubs 25 arranged to slide in pedestals 23. The
pedestals are lined with antifriction material 24. Neoprene rings
to each side of a pedestal 23 are compressed as the housing
moves axial due to thermal changes which cause the shaft of
the housing to expand or contract.

FIG_2

EP 0 232 011 A1

**Description**

"SHAFT EXPANSION ADJUSTMENT"

## BACKGROUND TO THE INVENTION

This invention relates to shaft expansion adjustment.

The shafts of many machines expand in length after start-up of the machine. If the shafts are journalled in roller bearings, it is essential that means be provided to allow the expansion to take place without strain on the bearings. Conventionally the bearing housings have been mouted on knife-edges so that on expansion of the shafts, the housing could move. However, this is not a very satisfactory solution to the problem.

Large bearings, e.g. of cement kilns and the like, are narrow in relation to their diameter. Axial forces applied to such bearings tend to cause them to tilt and such tilting can lead to disasters.

## SUMMARY OF THE INVENTION

According to the invention a housing for a shaft bearing is so mounted that the housing is prevented from rotating about the shaft axis and is guided for limited movement in both directions of the length of the shaft while being held against tilting in planes transverse to the shaft.

In other words, the sliding motion of the housing is treated quite separately from the rotary motion of the shaft.

In the preferred form of the invention the housing is mounted to at least two stubs, and each of the stubs in turn is mounted between a pair of pedestals in which it can slide freely parallel to the shaft axis, so that shaft expansion imparted to the housing is taken up by movement of the stubs.

Preferably the pedestal surfaces in which the stubs move are lined with solid antifriction material.

Resiliently compressible seals may be provided between the stubs and the pedestals, which seals are compressed by movement of the stubs.

## DESCRIPTION OF THE DRAWINGS

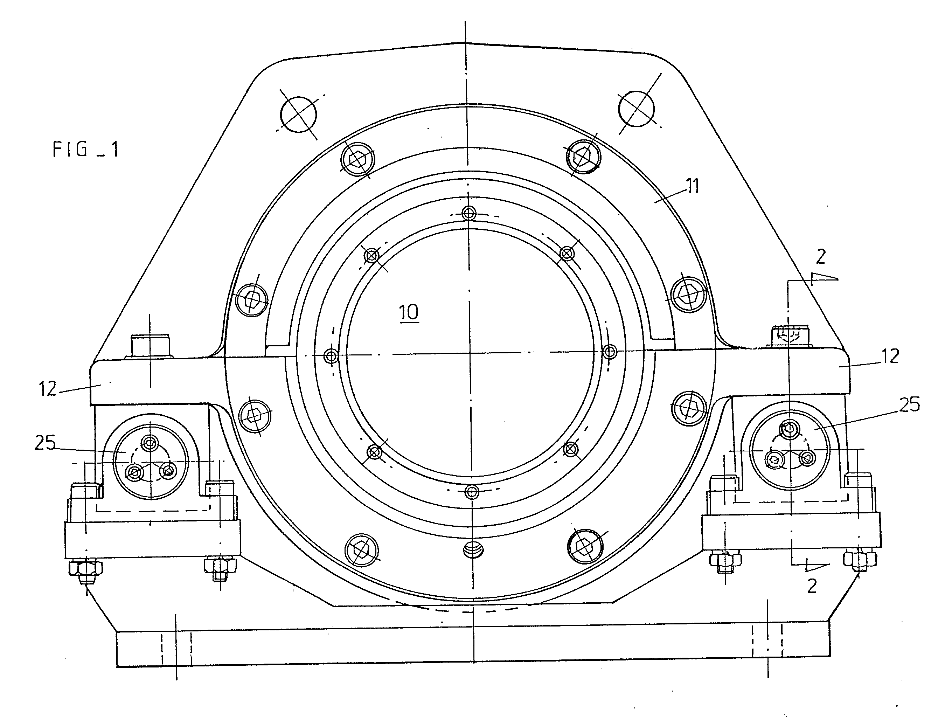

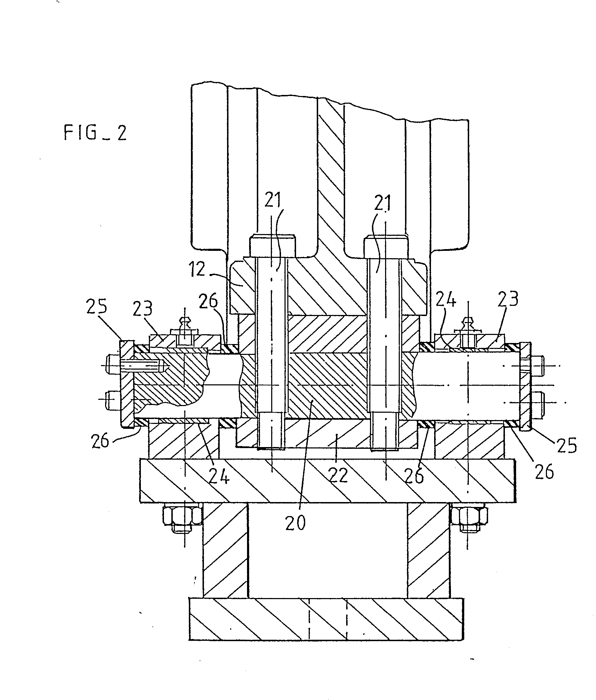

Figure 1 is an end view of a bearing housing, and Figure 2 is a section on the line 2-2 in Figure 1.

## DESCRIPTION OF AN EMBODIMENT

In Figure 1 a shaft 10 is journalled to a roller bearing in a housing 11. The housing 11 is supported by a pair of flanged brackets 12 in the manner described below with reference to Figure 2. As shown in Figure 2 a bracket 12 is secured to a stub 20 by means of screws 21 through an intermediate sleeve 22. The sleeve 22 could be integral with the bracket 12. The stub 20 is journalled for sliding movement at each end in a pedestal 23 lined with a layer 24 of dry antifriction material.

The stub 20 is provided with end caps 25. The pedestals 23 are flanked by neoprene rings 26.

The illustrated position is the neutral position. On start-up the rings 26 to the right of the pedestals 23 will be slightly compressed, while when the shaft 10 is fully expanded the rings to the left of the pedestals 23 will be compressed. The rings 26 also seal against the entry of dirt.

The axes of the stubs 20 are positioned in a plane containing the centre line of the loaded zone of the bearing. This minimizes tilting loads. In any case the stub mounting prevents tilting of the housing 11.

Since the same housing elements can be used at the fixed end and the movable end of the shaft 10 the inventory on spares may be reduced to a considerable extent.

## Claims

1. A housing for a shaft bearing which is mounted so that the housing is prevented from rotating about the shaft axis and is guided for limited axial movement in both directions of the length of the shaft while being held against tilting in planes transverse to the shaft.

2. The housing claimed in claim 1 which is mounted to at least two stubs, and each of the stubs in turn is mounted between a pair of pedestals in which it can slide freely parallel to the shaft axis, so that shaft expansion imparted to the housing is taken up by movement of the stubs.

3. The invention claimed in claim 2 in which the pedestal surfaces in which the stubs move are lined with solid antifriction material.

4. The invention claimed in either one of claims 2 or 3 in which resiliently compressible seals are provided between the stubs and the pedestals, which seals are compressed by movement of the stubs.

FIG_1

FIG_2

0232011

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-C- 529 747 (INVENTIA PATENT) <br> * Whole document * | 1 | F 16 C 35/00 <br> F 16 C 23/00 |
| | --- | | |
| A | US-A-3 350 144 (BECKMAN) <br> * Whole document * | 1 | |
| | --- | | |
| A | US-A-2 772 126 (GUY) | | |
| | --- | | |
| A | FR-A-2 405 393 (DEUTSCHE BABCOCK AG) | | |
| | ----- | | |

**TECHNICAL FIELDS SEARCHED (Int. Cl.4)**

F 16 C 35/00
F 16 C 23/00

The present search report has been drawn up for all claims

| Place of search | Date of completion of the search | Examiner |
|---|---|---|
| THE HAGUE | 06-04-1987 | BALDWIN D.R. |